# EUROPEAN PATENT APPLICATION

(11) **EP 1 391 954 A2**
(43) Date of publication of application: **25.02.2004**
(21) Application number: 03254827.3
(22) Date of filing: 01.08.2003
(51) Int. Cl.: H01M 8/02, H01M 8/24

(54) **Fuel-cell element stack with stress relief and method for fabricating this cell**

(30) Priority: 23.01.2003 US 350467; 10.10.2002 US 269771; 14.08.2002 US 219507
(71) Applicant: Hewlett-Packard Development Company, L.P., Houston, TX 77070 (US)
(72) Inventor: Champion, David, Lebanon, OR 97355 (US); Gradwohl, Jonald R., Corvallis, OR 97330 (US); Mardilovich, Peter, Corvallis, OR 97330 (US); Beatty, Christopher, Albany, OR 97321 (US)
(74) Representative: Exell, Jonathan Mark

(57) **Abstract**

A fuel-cell assembly has a plurality of unit cells (**20**), each of the unit cells comprising an anode (**30**), an electrolyte (**40**), a cathode (**50**), and a current collector (**55**). The fuel-cell assembly has a plurality of electrical interconnection elements (**60, 65**), at least one electrical interconnection element being connected respectively to each anode, to each cathode, and to each current collector of the unit cells. The unit cells are arranged in a stack (**10**) and are mechanically supported by electrical interconnection elements such that each of the unit cells of the stack has at least one edge (**25**) free to move relative to the electrical interconnection elements.

## Description

This invention relates to fuel cells and more particularly to stress relief in MEMS-based fuel-cell structures and related methods.

Various portable devices, such as laptop computers, personal digital assistants (PDA's), portable digital and video cameras, portable music players, portable electronic games, and cellular phones or other wireless devices, require portable power sources. The weight and inconveniences of single-use batteries and rechargeable batteries have motivated efforts to replace those power sources for portable use. Thus, there is an increasing demand for light-weight, re-usable, efficient, and reliable power sources in such applications and in many other applications as well. In attempts to meet these needs, various portable fuel cells have been developed, such as ceramic-based solid-oxide fuel cells, direct methanol fuel-cell (DMFC) systems, reformed-methanol-to-hydrogen fuel-cell (RMHFC) systems, and other proton-exchange-membrane (PEM) fuel-cell systems. Microscale design principles have been applied to the design of portable fuel cells to provide improved power density and efficiency and to provide lower cost. However, microscale designs can be susceptible to thermally-induced mechanical stress. There is a continuing need and a large anticipated market for improved practical compact portable fuel cells with rapid startup times and improved efficiency. There is a particular need for compact portable fuel cells with improved relief of thermally-induced mechanical stress. 5 10 15 20 25

According to one aspect of the present invention, there is provided an assembly according to claim 1 or 9.

According to another aspect of the present invention, there is provided a method according to claim 11.

The features and advantages of the disclosure will readily be appreciated by persons skilled in the art from the following detailed description when read in conjunction with the drawings, wherein:
FIG. 1 is a perspective view illustrating a first embodiment of a fuel-cell element stack made in accordance with the invention.
FIG. 2A is a cross-sectional side elevation view of the embodiment of FIG. 1.
FIG. 2B is a top view of the embodiment of FIG. 1.
FIG. 3 is a cross-sectional side elevation view illustrating a second embodiment of a fuel-cell element stack made in accordance with the invention.
FIG. 4A is a cross-sectional side elevation view of a third embodiment.
FIGS. 4B and 4C are top views of alternate unit cells of the third embodiment.
FIG. 5 is an exploded perspective view illustrating an embodiment of a fuel-cell assembly made in accordance with the invention and employing an embodiment of a fuel-cell element stack made in accordance with the invention.
FIG. 6 is an exploded perspective view of a portion of an embodiment of a fuel-cell assembly, illustrating details thereof. 5 10 15 20 25
FIG. 7 is a perspective view of an embodiment of a fuel-cell assembly, illustrating additional details thereof.
FIG. 8 is a flowchart illustrating an embodiment of methods performed in accordance with the invention.

Throughout this specification and the appended claims, the term "fuel cell" means a fuel cell in its usual meaning or a battery cell having at least one each of an anode, a cathode, and an electrolyte. A "unit cell" is one cell comprising an anode, a cathode, and an electrolyte. The term "MEMS" has its conventional meaning of a micro-electro-mechanical system. The term "lateral" is used to mean generally parallel to the principal plane of a generally planar unit cell. For clarity of the description, the drawings are not drawn to a uniform scale. In particular, vertical and horizontal scales may differ from each other and may vary from one drawing to another.

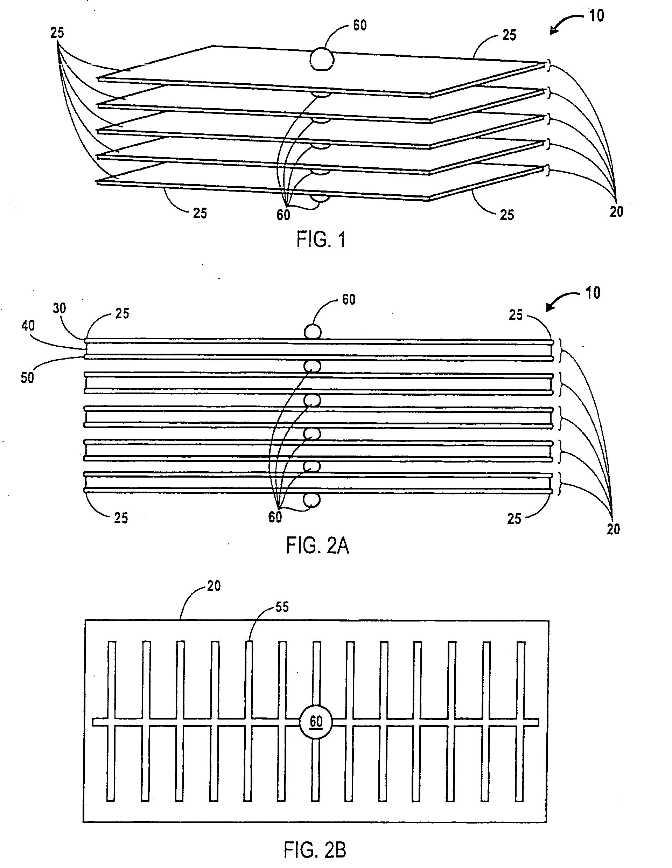

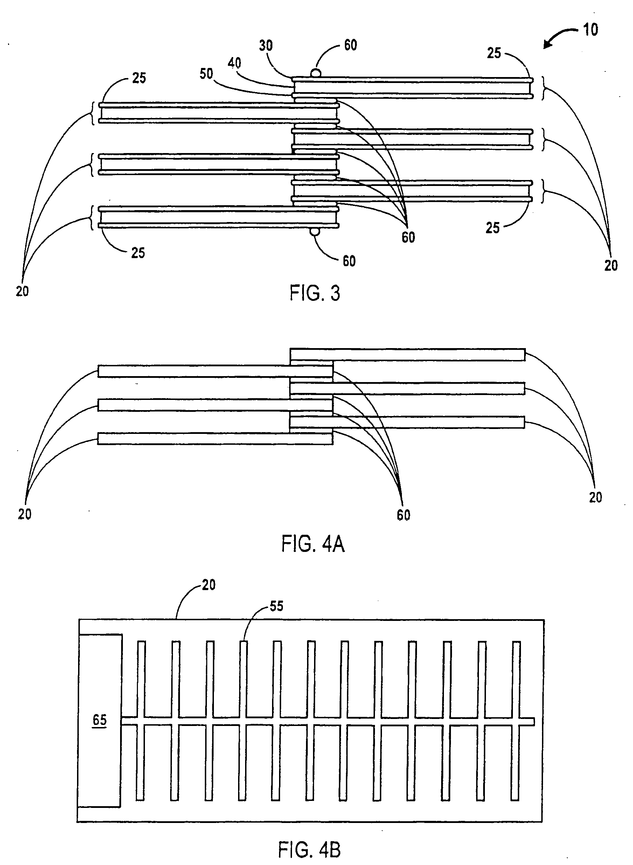

One aspect of the invention is a fuel-cell stack **10** comprising a number of unit cells **20** connected together. A first embodiment of such a fuel-cell stack **10** is shown in FIGS. 1, 2A, and 2B. A second embodiment of such a fuel-cell stack **10** is shown in FIG. 3. In the embodiment of FIGS. 1, 2A, and 2B, the unit cells **20** are vertically aligned with each other. In the embodiment of FIG. 3, unit cells **20** are staggered, i.e., alternate unit cells extend in opposite directions.

Each unit cell has an anode **30**, a cathode **50**, and an electrolyte **40** in contact with the anode and cathode. As shown in FIG. 2B, each unit cell may also have a current collector **55.** The unit cell may be a MEMS-based unit cell in which MEMS techniques are used to make the anode **30**, cathode **50**, electrolyte **40** and current collector **55**. As described in the parent applications incorporated by reference, any of the three elements, anode **30,** electrolyte **40,** or cathode **50**, may support the other two elements of the unit cell. While the unit cell embodiments shown in 1, 2A, 2B, and 3 have the anode **30** at the top, the cathode **50** at the bottom and the electrolyte **40** in the middle of each unit cell, that configuration is shown for illustrative purposes only and is not intended to be limiting of the invention. A person skilled in the art will readily recognize from the detailed descriptions of the applications incorporated herein by reference that various other configurations of each unit cell may be made.

Each unit cell **20** of stack **10** has electrical interconnection elements **60**, at least one electrical interconnection element **60** being connected to each anode **30** and to each cathode **50** respectively. The unit cells **20** are also mechanically supported by electrical interconnection elements **60**. Each unit cell **20** has at least one edge **25** free to move relative to electrical interconnection elements **60.** In the embodiment of 1, 2A, and 2B, the electrical interconnection elements **60** of unit cells **20** are vertically aligned with each other. In the embodiment of FIG. 3, the electrical interconnection elements **60** are vertically aligned with each other, although unit cells **20** are staggered, extending alternately in opposite directions from the common alignment axis of the electrical interconnection elements **60** by which unit cells **20** are mechanically supported. However, it is not generally necessary for all the electrical interconnection elements **60** to be vertically aligned along a single common axis. Various arrangements of the electrical interconnection elements **60** may be used, with various degrees of alignment.

Each of the electrical interconnection elements **60** may be a conductive pin, for example, mounted in a conventional pin opening (not shown) in each unit cell **20**. Many suitable interconnection pin materials and configurations are known in the art. The material should have good electrical conductivity and a thermal expansion coefficient that is similar to the overall thermal expansion coefficient of the unit cells **20**. The material should also be catalytically inert. In the embodiments illustrated in FIGS. 1, 2A, 2B, and 3, each of the electrical interconnection elements **60** is a ball bond, e.g., a gold ball. Such an interconnection element has advantages, including the inertness and relative softness of gold and a relatively small contact area with unit cell **20**. However, it is not required that the spherical shape be retained. Square, rectangular, triangular, or other shapes may be used for electrical interconnection elements **60** if convenient. As shown in FIG. 3, the interior electrical interconnection elements **60** may be flattened when the stack **10** is compressed.

As shown in FIGS. 1, 2A, 2B, and 3, unit cells **20** have four edges **25** free to move relative to electrical interconnection elements **60.** It will be readily understood that a mechanical constraint of any of the edges **25** could reduce the number of edges free to move, but it is desirable to leave at least one edge **25** of each unit cell unconstrained and free to move relative to electrical interconnection elements **60.** Thus, various embodiments like those of FIGS. 1, 2A, 2B, and 3 may have one, two, three or four edges **25** free to move relative to electrical interconnection elements **60**. An example of an embodiment with only one edge **25** free to move is one with circular or elliptical unit cells, in which the entire periphery may be considered one edge.

In the embodiments illustrated in FIGS. 1, 2A, 2B, and 3, each of the unit cells **20** is cantilevered from the electrical interconnection elements **60** by which it is mechanically supported. The electrical interconnection elements **60** are disposed between the unit cells of each pair of adjacent unit cells, and each electrical interconnection element **60** is shared by the two adjacent unit cells.

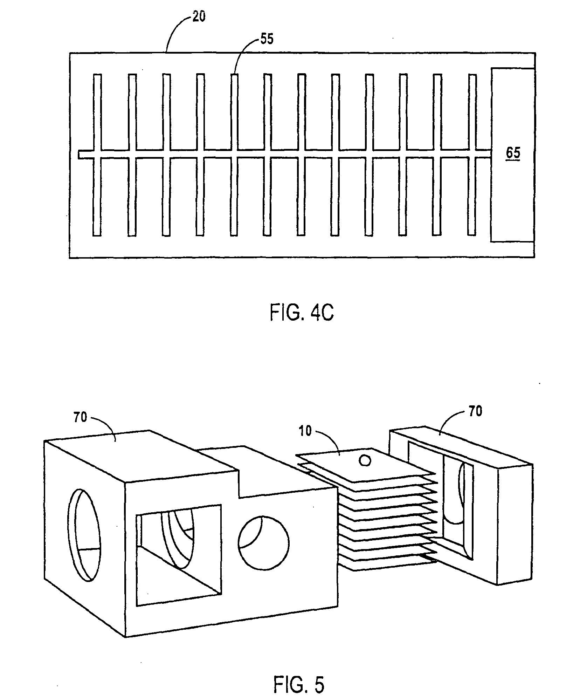

A third embodiment is shown in FIGS. 4A - 4C. As in FIG. 3, the embodiment of FIG. 4A also has unit cells **20** staggered, i.e., alternate unit cells extend in opposite directions. In this embodiment, the unit cells are supported by bond-pad interconnection elements **65,** which connect both electrically and mechanically to current collectors **55.** In this embodiment, the unit cells **20** are cantilevered from the bond-pad interconnection elements **65**. The particular dual-comb-shaped configurations of current collectors **55** shown in FIGS. 2B, 4B, and 4C are illustrative of a particular design choice for a current collector and should not be considered limiting of the invention. A person skilled in the art will recognize that many other useful design configurations may be used besides the layout shown in the drawings.

It will also be recognized that many types of electrical interconnection elements **60** or **65** are suitable, depending on the application, the temperature ranges occurring during startup and operation of the fuel-cell stack, etc. Types of electrical interconnections that are suitable in various applications include ball bonds, bond pads, pins, clips, nail-head bonds, wire bonds, ultrasonic bonds, , solder bonds, controlled-collapse bonds, surface-mount bonds, brazed bonds, compression bonds, and welded bonds, for example.

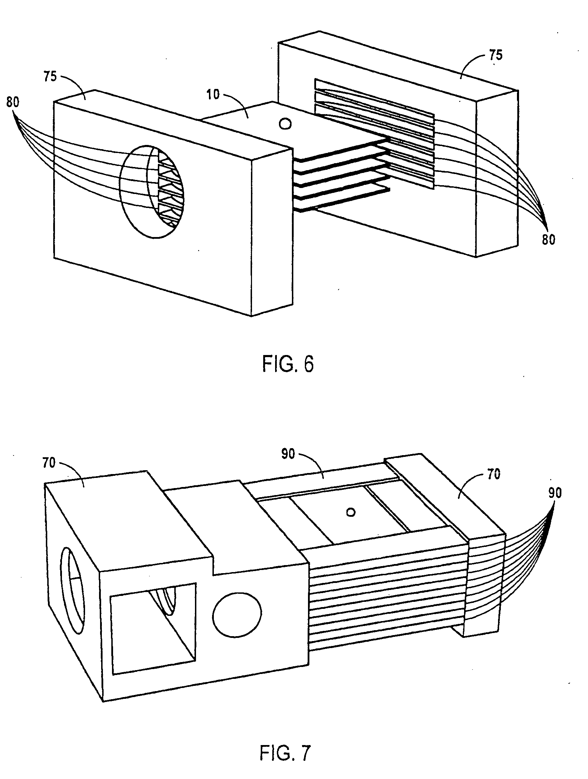

FIG. 5 illustrates schematically an exploded perspective view of major components of a fuel-cell assembly, in which the stack **10** of unit cells is held in a housing or fixture **70** that has openings or slots for supplying fuel and air or other source of oxidant. Not shown in FIG. 5 are leads for current collection from the fuel cell, fasteners, and mounting hardware, for example.

As shown in FIG. 6, a fixture **75** may be provided, having slots **80** for gas flow.

In operation each unit cell **20** has an operable range of thermal expansion determined by the temperature range reached and the thermal expansion coefficients of the various constituents. The fuel-cell assembly is configured so that the edges **25** that are free to move laterally relative to electrical interconnection elements **60** remain free to move laterally throughout the entire operable range of thermal expansion. For example, as shown in FIG. 7, a housing or fixture **70** may be provided, having trays **90** adapted to receive portion(s) of each unit cell **20** including the edge(s) **25** that are free to move laterally relative to interconnection elements **60.** Thus, each of the movable edges **25** is loosely (i.e., movably) positioned in one of the trays **90** of fixture **70**. Fixture **70** has vent openings to allow adequate flow of fuel and an adequate oxidant source such as air flow across the unit cells. Not shown in FIGS. 5 - 7 are conventional thermocouples that may be used for monitoring stack temperatures and heaters that may be used for heating the unit cells.

As temperatures vary during start-up, operation, and shut-down of the fuel cell assembly, the unit cells may expand and contract within fixture **70** in accordance with the composite thermal expansion coefficients. Throughout the operable temperature range, the freely movable edges **25** remain laterally unconstrained, thus preventing stresses that would otherwise accompany the thermal expansion.

FIG. 7 illustrates another embodiment of a fuel cell assembly. In the embodiment of FIG. 7, stacking trays **90** also provide alignment of the unit cells, during bonding of the stack. As shown in FIG. 7, each stacking tray **90** has top and bottom openings large enough to allow interconnection elements **60** to extend through the openings throughout the stack. The openings are symmetric in shape and size. Thus, while only the top opening is visible in FIG. 7, the bottom opening is identical to the top opening in this embodiment. Stacking trays **90** also have internal slots (not visible in FIG. 7). As shown in FIG. 7, stacking trays **90** may be left in place when stack **10** is assembled into housing **70**, maintaining alignment of the unit cells **20** while allowing lateral expansion of the edges **25** within their individual internal slots. As will be readily understood by those skilled in the art, the height of the internal slot of each stacking tray **90** may be chosen to limit out-of-plane bending of the unit cell and to limit motion of the unit cell more or less perpendicular to its principal plane due to non-uniform thermal expansion or contraction, while still allowing lateral expansion or contraction substantially parallel to the unit cell's principal plane.

Thus, one aspect of the invention may be embodied in a fuel-cell assembly that has elements for generating electric current. Each of these current-generating elements includes an anode, an electrolyte, and a cathode, and may include a current collector. The fuel-cell assembly also has elements for electrically interconnecting the current-generating elements. At least one of those interconnecting elements is connected to each anode, and at least one of the interconnecting elements is connected to each cathode. Electrical interconnecting elements are also connected to the current collector if one is present. The current-generating elements are mechanically supported by the electrical interconnecting elements, such that each of the current-generating elements has at least one edge free to move relative to the electrical interconnecting elements. In this fuel-cell assembly, each of the current-generating elements has an operable range of thermal expansion. Each edge that is free to move relative to the electrical interconnecting elements remains free to move throughout the operable range of thermal expansion.

Various embodiments illustrate two useful features: the support of each unit cell of a stack by fixed electrical interconnections which also serve as mechanical supports, and the freedom of lateral expansion/contraction of the unit cells, while limiting the range of bending or motion of the unit cells in directions more or less perpendicular to the surface of each unit cell. The latter feature is illustrated by stacking trays **90,** for example.

Fixture **75** has a tray **90** for each unit cell **20**. Each unit cell is positioned with a portion of the unit cell (including edge **25**) in an internal slot of tray **90**, loosely enough positioned so that the edge **25** of unit cell **20** may move freely in lateral directions in response to thermal expansion, but the internal slot limits out-of-plane bending and motion of the unit cell. It will be understood that each of the unit cells has an operable range of thermal expansion and that the portion of unit cell **20** in tray **90** remains within tray **90** throughout the operable range of thermal expansion. Thus, each tray **90** is adapted to receive a unit cell of the stack, and tray **90** may be used to limit out-of-plane bending and motion while allowing lateral motion of unit cell edges **25** due to thermal expansion.

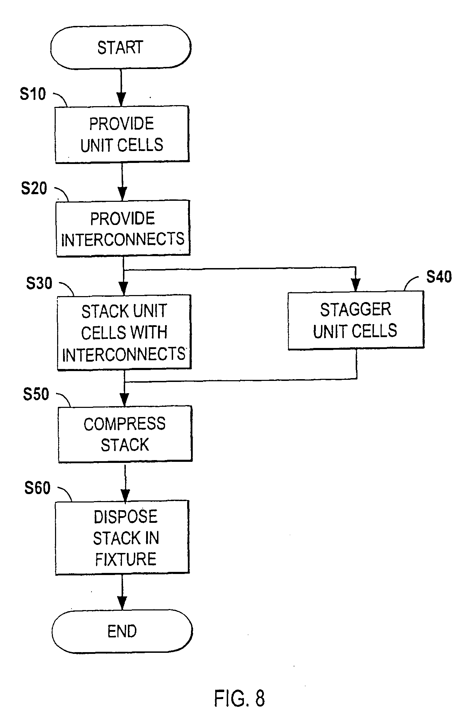

Another aspect of the invention is a method for fabricating fuel-cell assemblies. An embodiment for such a method for fabricating the fuel-cell assembly is illustrated by the flowchart of FIG. 8. The method includes the steps of (**S10**) providing a multiplicity of fuel-cell unit cells **20** (each fuel-cell unit cell comprising an anode **30**, an electrolyte **40**, and a cathode **50**); (**S20**) providing interconnection elements **60** adapted to connect to the anode **30** and cathode **50** of each of the unit cells; (**S30**) assembling a stack **10** by stacking the multiplicity of unit cells with at least one of the interconnection elements **60** disposed between each pair of adjacent unit cells of the stack, while leaving at least one edge **25** of each of the unit cells free to move; and (**S50**) affixing each unit cell **20** in the stack by connecting interconnection elements **60** to each unit cell **20**. Stack **10** is placed (**S60**) in a fixture **75**. Fixture **75** may be housed in a housing **70.** The assembling step (**S30**) may performed by the step (**S40**) of disposing the unit cells **20** in a staggered configuration. One way of assembling the stack of unit cells **20** is by disposing each interconnection element **60** near one edge of each unit cell; then at least one distal edge **25** of each unit cell is free to move. If alternate free ends **25** extend in opposite directions, the unit cells **20** will be staggered. This is one configuration in which unit cells **20** are cantilevered from interconnection elements **60**. Affixing step (**S50**) may be performed by compressing the stack of unit cells **20** (compression bonding). Alternatively, various other methods of bonding known in the art may be employed, such as brazing, welding, wire- bonding, ultrasonic bonding, or soldering.

Although the foregoing has been a description and illustration of specific embodiments of the invention, various modifications and changes can be made thereto by persons skilled in the art without departing from the scope and spirit of the invention as defined by the following claims. For example, if the thermal expansion of each unit cell is anisotropic, the interconnection elements **60** and internal slots of the trays may be disposed to direct maximum expansion into the direction of the trays' internal slots. Similarly, several interconnection elements **60** may be disposed so that they share the load of supporting an individual unit cell. The interconnection elements **60** may be disposed proximate to one edge of each unit cell, for example.

## Claims

1. A fuel-cell assembly comprising:
a) a plurality of unit cells, each of said unit cells comprising an anode, an electrolyte, a cathode, and a current collector, and each of said unit cells having at least one edge, said unit cells being arranged in a stack; and
b) a plurality of electrical interconnection elements, at least one electrical interconnection element being electrically connected respectively to each anode and to each cathode of said unit cells, each of said unit cells being mechanically supported by at least one of said electrical interconnection elements such that said at least one edge of each of said unit cells is free to move relative to said electrical interconnection elements.

2. The fuel-cell assembly of claim 1, wherein each of said unit cells has an operable range of thermal expansion and said at least one edge free to move relative to said electrical interconnection elements remains free to move throughout the operable range of thermal expansion.

3. The fuel-cell assembly of claims 1 or 2, wherein each of said unit cells is cantilevered from said electrical interconnection elements by which it is mechanically supported.

4. The fuel-cell assembly of any of claims 1 - 3, wherein at least one of said electrical interconnection elements by which said unit cells are mechanically supported is electrically connected to one of said anode, cathode, or current collector.

5. The fuel-cell assembly of any of claims 1 - 4, wherein each of said plurality of electrical interconnection elements comprises a ball bond.

6. The fuel-cell assembly of any of claims 1 - 5, wherein said unit cells are staggered such that adjacent unit cells extend alternately in opposite directions from said electrical interconnection elements by which said unit cells are mechanically supported.

7. The fuel-cell assembly of claim 1, further comprising a number of trays and a fixture adapted to receive the trays, each of said trays being adapted to receive at least a portion of a unit cell including said at least one edge that is free to move relative to said electrical interconnection elements.

8. The fuel-cell assembly of claim 7, wherein each of said edges of each unit cell that is free to move relative to said electrical interconnection elements is movably disposed in one of said trays of said fixture.

9. A fuel-cell assembly comprising in combination:
a) a plurality of unit-cell means for generating electric current, each of said unit-cell means comprising an anode, an electrolyte, a cathode, and a current collector; said unit-cell means being arranged in a stack; and
b) a plurality of means for electrically interconnecting said unit-cell means, at least one electrical interconnecting means being connected respectively to each anode and to each cathode of said unit-cell means, said unit-cell means being mechanically supported by said means for electrically interconnecting such that each of said unit-cell means has at least one edge free to move relative to said means for electrically interconnecting.

10. The fuel-cell assembly of claim 9, wherein each of said unit-cell means has an operable range of thermal expansion and said at least one edge free to move relative to said electrical interconnecting means remains free to move throughout the operable range of thermal expansion.

11. A method for fabricating a fuel-cell assembly, said method comprising the steps of:
a) providing a multiplicity of fuel-cell unit cells, each fuel-cell unit cell comprising an anode, an electrolyte, a cathode, and a current collector;
b) providing electrical interconnection elements adapted to connect electrically to said anode, cathode, and current collector of each of the unit cells;
c) assembling a stack by stacking the multiplicity of unit cells with at least one of said electrical interconnection elements disposed between each pair of adjacent unit cells of the stack, while leaving at least one edge of each of said unit cells free to move relative to said electrical interconnection elements; and
d) affixing each unit cell in the stack by connecting said electrical interconnection elements to each unit cell.

12. The method of claim 11, wherein the steps are performed in the order recited.

13. A fuel-cell assembly fabricated by the method of either of claims 11 or 12.

14. The method of claim 11, wherein said assembling step c) is performed by disposing each interconnection element proximate to one edge of each unit cell, whereby at least a distal edge of each unit cell is free to move.

15. The method of claim 11, wherein said assembling step c) is performed by disposing said unit cells in a staggered configuration.

16. The method of claim 11, wherein said assembling step c) is performed by cantilevering each of said unit cells from said interconnection elements.

17. The method of claim 11, wherein said affixing step d) is performed by compressing said stack.

18. The method of claim 11, further comprising the step of disposing said stack in a fixture.

19. The method of claim 18, wherein said fixture has at least one tray for each unit cell, said method further comprising the step of disposing at least a portion of each unit cell movably in a tray of said fixture.

20. The method of claim 19, wherein each of said unit cells has an operable range of thermal expansion and said step of disposing at least a portion of each unit cell movably in a tray of said fixture includes disposing said portion such that said portion remains within said tray of said fixture throughout the operable range of thermal expansion.
